# EUROPEAN PATENT SPECIFICATION

(11) **EP 2 971 557 B1**
(45) Date of publication and mention of the grant of the patent: **20.02.2019**
(21) Application number: 13811070.5
(22) Date of filing: 02.12.2013
(51) Int. Cl.: F01D 5/28, F01D 5/30

(54) **COMPOSITE RETENTION FEATURE**
ZUSAMMENGESETZTES HALTEMITTEL
ÉLÉMENT DE RETENUE EN COMPOSITE

(30) Priority: 15.03.2013 US 201361789932 P
(43) Date of publication of application: 20.01.2016
(73) Proprietor: Rolls-Royce Corporation, Indianapolis, Indiana 46225 (US); Rolls-Royce North American Technologies, Inc., Indianapolis, IN 46241 (US)
(72) Inventor: LOFTUS, Peter, Greenwood, IN 46143 (US); CHAMBERLAIN, Adam, L., Mooresville, IN 46158 (US); FFREEMAN, Ted, J., Danville, IN 46122 (US)
(74) Representative: Gille Hrabal
(86) International application number: PCT/US2013/072581
(87) International publication number: WO 2014/143225

(56) References cited:
- EP-A2- 1 555 391
- EP-A2- 2 363 574
- US-A- 4 802 824
- US-A1- 2008 166 225
- US-A1- 2012 027 605

## Description

### FIELD OF DISCLOSURE

The present disclosure relates generally to gas turbine engines, and more specifically to dovetail features used in gas turbine engines.

### BACKGROUND

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft, fan, or propeller. Left-over products of the combustion are exhausted out of the turbine and may provide thrust in some applications.

Turbines typically include alternating stages of static vane assemblies and rotating wheel assemblies. The rotating wheel assemblies include disks carrying blades that are coupled to the disks. When the rotating wheel assemblies turn, tips of the blades move along blade tracks included in static shrouds that are supported around the rotating wheel assemblies.

Interest in improving efficiency and reducing emissions of gas turbine engines is driving demand for components that can withstand high temperature environments. One limitation to improving the efficiency and reducing the emissions of some gas turbine engines is the temperature capability of hot section components (for example, but not limited to turbine vanes, blades, and blade tracks). Materials able to withstand high temperature environments, such as ceramic-based materials, may be considered for use in gas turbines but present design and manufacturing challenges.

Document EP 1555391 A2 discloses a hybrid ceramic matrix composite turbine engine component comprising an outer shell section(s) 36 and an inner core section(s) 34, wherein the outer shell section(s) 36 and the inner core section(s) 34 were bonded together using an MI process. The outer shell section(s) 36 comprises a SiC/SiC material that has been manufactured using a process selected from the group consisting of a slurry cast MI process and a prepreg MI process. The inner core section(s) 34 comprises a material selected from the group consisting an Si/SiC composite material and a monolithic ceramic material. The Si/SiC composite material may be manufactured using the Silcomp process. The turbine engine component may be a high pressure turbine blade, a high pressure turbine vane, a low pressure turbine blade 20, or a low pressure turbine vane.

Document US2012027605A1 discloses a turbomachine blade made of composite material and presenting a root with a bulb-shaped end suitable for engaging in a slot of a rotor disk. In characteristic manner, the end of the root of the blade is provided, beside one of its front faces, with a projecting portion having two symmetrical fins about the axial midplane of the root, each fin having a bearing face suitable for limiting tilting of the blade relative to the rotor disk about the axial direction.

Document EP2363574A2 discloses an airfoil 26 comprising a plurality of ceramic matrix composite (CMC) fabric sheets 37 which are layered to form a single, layered fabric sheet. The layered fabric sheet is formed so as to define a pressure and suction side 38, 42 of the airfoil. The airfoil includes primary fibers 48 which extend radially outwardly from a rotor disk 25, for example. In this way, the airfoil is suitable for use in a gas turbine engine 10 due to the temperature resistance of CMC and the strength provided by the primary fibers.

The purpose of the invention is to provide a further developed apparatus and method of making the same.

### SUMMARY

For the solution of the problem serves a retention feature for use in a gas turbine engine according to the main claim and a method of making the same according to the further independent claim. Preferred embodiments are described in the dependent claims.

According to the present disclosure, turbine engine components used in hot sections of a gas turbine engine (e.g. turbine blade airfoils, blade track runners, etc.) are made from ceramic-based materials capable of withstanding high temperatures. The turbine engine components are mounted in the gas turbine engine by retention features that extend away from the corresponding turbine engine components. The retention features are illustratively adapted to mate with corresponding features (e.g. dovetail slots, fir tree slots, etc.) formed in other engine components.

In illustrative embodiments, each retention feature includes a ceramic post, at least one insert, and at least one braze layer interconnecting the ceramic post and the insert(s). The ceramic post illustratively extends away from a turbine engine component and forms a channel facing away from the turbine engine component. The insert(s) is arranged in the channel and resists buckling of the ceramic post into the channel. The braze layer couples the insert(s) to the ceramic post and allows forces to be transmitted between the ceramic post and the insert(s).

In some illustrative embodiments, the insert(s) are made from a ceramic matrix composite material including two-dimensional sheets of reinforcing fibers. More specifically, the insert(s) are constructed from two-dimensional fabric sheets of silicon carbide fibers and a silicon carbide matrix. The two-dimensional fabric sheets are sized to cover a cross-sectional area of the channel formed by the ceramic post and are stacked to fill at least a portion of the length of the channel. The matrix suspends the two-dimensional fabric sheets in place relative to one another to form each insert.

In other embodiments, the insert(s) are made from a ceramic matrix composite material including three-dimensional sheets of reinforcing fibers. More specifically, the insert(s) are constructed from three-dimensional fabric sheets of silicon carbide fibers and a silicon carbide matrix. The three-dimensional fabric sheets are illustratively arranged to form a U-shape sized to extend along walls of the channel formed by the ceramic post and are stacked to cover only a portion of the depth of the channel. The U-shaped insert(s) are further sized to fill at least a portion of the length of the channel. The matrix suspends the three-dimensional fabric sheets in place relative to one another to form each insert.

In illustrative embodiments, the braze layer(s) are adapted to couple the insert(s) made from ceramic matrix composite material to the ceramic post. The braze layer(s) are illustratively made from a silicide including silicon and at least one of zirconium, molybdenum, hafnium, boron, and carbon. The braze layer(s) may also include inert ceramic fibers.

According to the invention, a retention feature for use in a gas turbine engine includes a ceramic post, a first insert, and a first braze layer coupling the first insert to the ceramic post. The ceramic post includes a body adapted to be coupled to a turbine engine component and a head coupled to the body. The head is formed to include a space and the first insert is arranged in the space. The first braze layer extends from the ceramic post to the first insert to bond the first insert to the ceramic post.

In some embodiments, the space may form a channel opening away from the body and extending through the head of the ceramic post. The first insert may be sized to fill a portion of the channel. The first insert may be U-shaped.

According to the invention, the retention feature also includes a second insert. The second insert is arranged in the space and a second braze layer extends from the ceramic post to the second insert to bond the second insert to the ceramic post. The second insert is spaced apart from the first insert.

According to the invention, the space may form a channel opening away from the body and extending through the head of the ceramic post. The first insert and the second insert may be sized to fill a portion of the channel. Alternatively, the first insert and the second insert may be U-shaped. The body and the head of the ceramic post may cooperate to form a Y-shape.

In some embodiments, the first braze layer may include silicon. The first braze layer may include a silicide including at least one of zirconium, molybdenum, hafnium, boron, and carbon. The first braze layer may include inert ceramic fibers.

In some embodiments, the ceramic post may consist essentially of a ceramic matrix composite. The ceramic post may include silicon and carbon. It is contemplated that the ceramic matrix composite of the ceramic post may include a ceramic fiber fabric.

In some embodiments, the first insert may consist essentially of a ceramic matrix composite. The first insert may include silicon and carbon. The first insert may include chopped ceramic fibers.

In some embodiments, the body of the ceramic post may include a proximal end coupled to an airfoil and a distal end coupled to the head. The airfoil may include a ceramic matrix material.

In some embodiments, the body of the ceramic post may include a proximal end coupled to a turbine blade track runner and a distal end coupled to the head. The turbine blade track runner may include a ceramic matrix material.

According to another aspect of the present disclosure, a method of making a retention feature for use in a gas turbine engine may include manufacturing a composite post including a body and a head coupled to the body. The head may be formed to include a space. The method may also include manufacturing a first insert, arranging the first insert into the space formed in the head, and depositing a first braze layer between the head and the first insert to bond the insert to the head.

In some embodiments, manufacturing the composite post may include preforming a post of ceramic fibers to include a body and a head and densifying the post of ceramic fibers. The body and the head of the post may cooperate to form a Y-shape. The method may also include a step of machining the densified post of ceramic fibers to produce the Y-shape. The densifying step may be performed via one or more of polymer infiltration, slurry infiltration, prepreg infiltration, chemical vapor infiltration, and melt infiltration.

In some embodiments, manufacturing the first insert may include preforming a ceramic fiber sheet into a predetermined shape and densifying the preformed at least one ceramic fiber sheet. The ceramic fiber sheet may be a two-dimensional sheet of ceramic fiber fabric or a three-dimensional sheet of ceramic fiber fabric. Densifying the preformed ceramic fiber sheet may be performed via one or more of polymer infiltration, slurry infiltration, prepreg infiltration, chemical vapor infiltration, and melt infiltration.

In some embodiments, manufacturing the first insert may include machining a piece of densified composite material to a predetermined shape. Manufacturing the first insert may include machining a monolithic piece of material to a predetermined shape.

These and other features of the present disclosure will become more apparent from the following description of the illustrative embodiments.

### BRIEF DESCRIPTION OF THE DRAWINGS

Fig. 1 is a cut-away perspective view of a gas turbine engine;
Fig. 2 is a partial cross-sectional view of the gas turbine engine of Fig. 1 showing the arrangement of a turbine wheel assembly and a turbine shroud assembly;
Fig. 3 is an exploded perspective view of the turbine wheel assembly of Fig. 2;
Fig. 4 is a perspective view of a turbine blade included in the turbine wheel assembly of Fig. 2;
Fig. 5 is a cross-sectional view of a blade retaining feature included in the turbine blade of Fig. 4;
Fig. 6 is a perspective view of another turbine blade adapted for use in the turbine wheel assembly of Fig. 2;
Fig. 7 is a cross-sectional view of a blade retaining feature included in the turbine blade of Fig. 6;
Fig. 8 is a perspective view of another turbine blade adapted for use in the turbine wheel assembly of Fig. 2;
Fig. 9 is a cross-sectional view of a blade retaining feature included in the turbine blade of Fig. 8;
Fig. 10 is an exploded perspective view of the turbine shroud assembly of Fig. 2;
Fig. 11 is a perspective view of a blade track segment included in the turbine shroud assembly of Fig. 10;
Fig. 12 is a cross-sectional view of a segment retaining feature included in the blade track segment of Fig. 11;
Fig. 13 is a perspective view of another blade track segment adapted for use in the turbine shroud assembly of Fig. 2;
Fig. 14 is a cross-sectional view of a segment retaining feature included in the blade track segment of Fig. 13;
Fig. 15 is a perspective view of another blade track segment adapted for use in the turbine shroud assembly of Fig. 2; and
Fig. 16 is a cross-sectional view of a segment retaining feature included in the blade track segment of Fig. 15.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

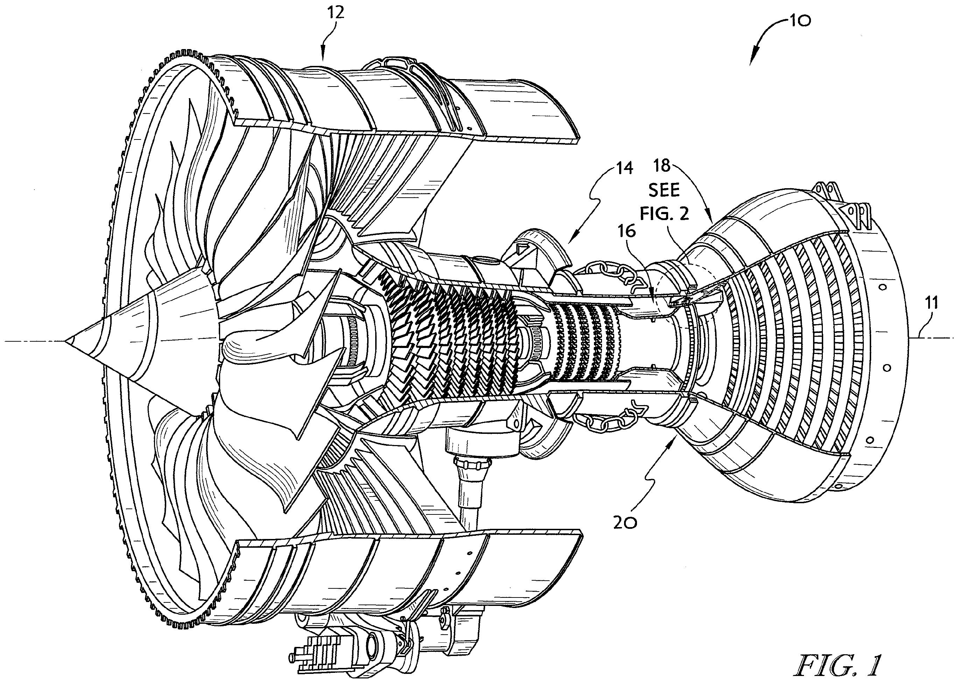

Fig. 1 is an illustrative aerospace gas turbine engine 10 cut-away to show that the engine 10 includes a fan 12, a compressor 14, a combustor 16, and a turbine 18 all mounted to a case 20. The fan 12 is driven by the turbine 18 and provides thrust for propelling an air vehicle (not shown). The compressor 14 is configured to compress and to deliver air to the combustor 16. The combustor 16 is configured to mix fuel with the compressed air received from the compressor 14 and to ignite the fuel. The hot high pressure products of the combustion reaction in the combustor 16 are directed into the turbine 18 and the turbine 18 extracts work to drive the compressor 14 and the fan 12.

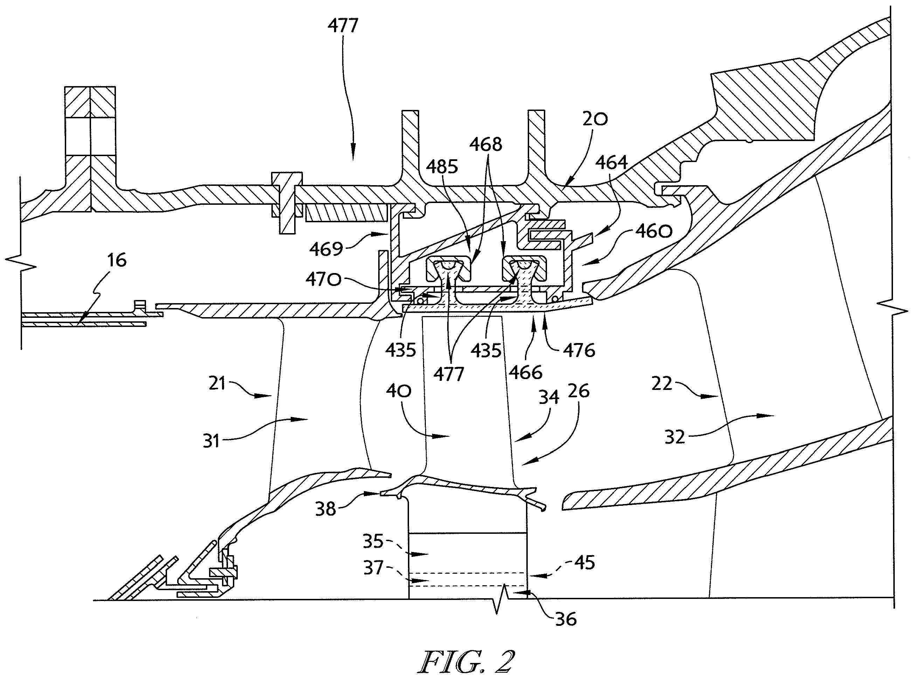

Referring now to Fig. 2, a portion of the turbine 18 is shown to include static turbine vane assemblies 21, 22 and a turbine wheel assembly 26. Each vane assembly 21, 22 includes a plurality corresponding of vanes 31, 32. The turbine wheel assembly 26 includes a plurality of blades 34 and a disk 36 supporting the blades 34 for rotation. The vanes 31 of the vane assembly 21 extend across the flow path of the hot, high-pressure combustion products from the combustor 16 to direct the combustion products toward the blades 34 of the turbine wheel assembly 26. The blades 34 are in turn pushed by the combustion products to cause the turbine wheel assembly 26 to rotate; thereby, driving the rotating components of the compressor 14 and the fan 12.

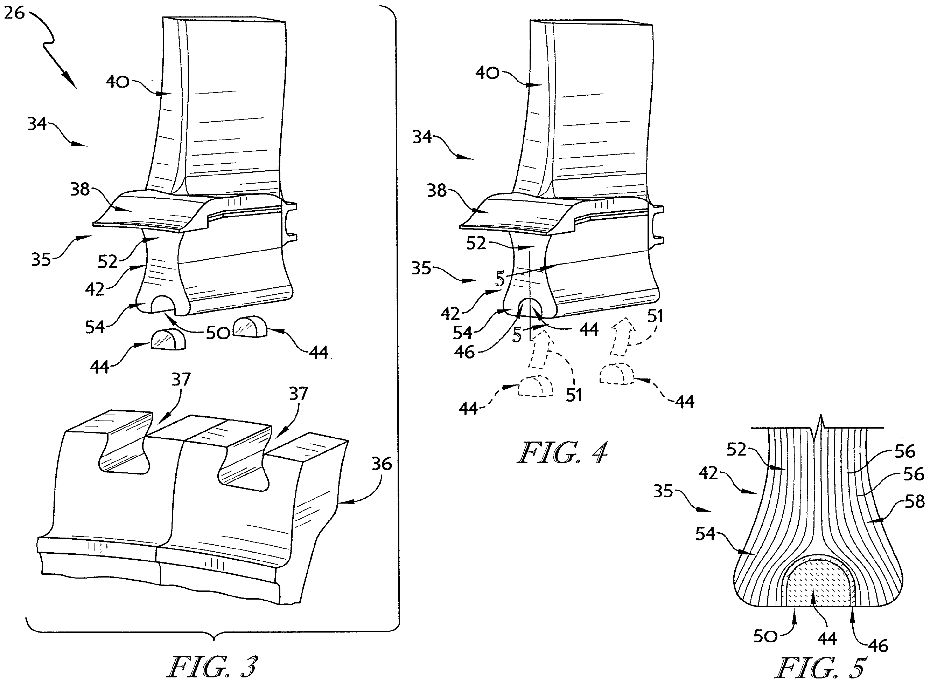

In the illustrative embodiment, the turbine blades 34 are coupled to the disk 36 by pair of complementary retaining features 35, 37 as shown in Figs. 2 and 3. Each turbine blade 34 includes a blade retaining feature 35, a platform 38, and an airfoil 40 as shown in Fig. 3. The disk 36 is illustratively a metallic component and is formed to include a plurality of disk retaining features 37 that extend axially through the disk 36 as shown in Fig. 3. The disk retaining features 37 are configured to receive the blade retaining features 35 of each turbine blade 34 to couple the blades 34 to the disk 36. In the illustrative embodiment, the blade retaining features 35 and the disk retaining features 37 cooperate to form a dovetail-type retention system 45 when the blade retaining features 35 are inserted into the disk retaining features 37. In other embodiments, the retaining features 35, 37 of the turbine blade 34 and the disk 36 may cooperate to form a fir-tree-type retention system or another suitable retention system.

The blade retaining feature 35 illustratively includes a post 42 formed with the rest of the turbine blade 34, a plurality of inserts 44 coupled to the post 42, and a plurality of braze layers 46 bonding the inserts 44 to the post 42 as shown in Figs. 4 and 5. The post 42 is illustratively Y-shaped and forms a channel 50. Each of the inserts 44 is arranged in the channel 50 to reinforce the post 42.

The post 42 illustratively includes a body 52 and a head 54 as shown in Fig. 3. The body 52 extends from the platform 38 of the turbine blade 34 away from the airfoil 40. The head 54 is coupled to the body 52 and is spaced apart from the platform 38 and the airfoil 40 of the turbine blade 34. The head 54 is formed to include the channel 50. The channel 50 illustratively extends through the head 54 in an axial direction and opens inwardly in a radial direction, facing away from the rest of the turbine blade 34.

The post 42 is illustratively made from a ceramic matrix composite material. The illustrative ceramic matrix composite material includes silicon carbide fibers formed into fabric sheets 56 and a silicon carbide matrix 58 as shown in Fig. 5. The fabric sheets 56 are illustratively arranged to extend generally inwardly in the radial direction and to bend outwardly in a circumferential direction around the channel 50 to form the Y-shape of the post 42 as shown in Fig. 5. In other embodiments, the post 42 may be made from other ceramic-based or non-ceramic-based composite materials including chopped fibers (random or directional), fiber tows, and/or unidirectional fiber tape combined with a matrix material.

Similarly, the platform 38 and the airfoil 40 of the turbine blade 34 are made from a ceramic matrix composite material, illustratively including silicon carbide fibers and a silicon carbide matrix. However, in other embodiments, the platform 38 and the airfoil 40 may be made of other ceramic-based or non-ceramic-based composite materials including reinforcing fibers and a matrix material.

The plurality of inserts 44 are illustratively spaced apart from one another along the channel 50 as suggested by arrows 55 in Fig. 4. Each insert 44 is sized to fill a portion of the channel 50 to resist buckling of the head 54 into the channel 50 due to forces applied to the head 54 induced by rotation of the turbine wheel assembly 26 during operation of the gas turbine engine 10. In the illustrative embodiment, two inserts 44 are shown arranged at opposite ends of the channel 50. In other embodiments, additional inserts 44 may be added and arranged along the channel 50.

Each insert 44 is illustratively made from a ceramic matrix composite material. The illustrative ceramic matrix composite material includes silicon carbide fibers formed into fabric sheets 56 and a silicon carbide matrix 58. The fabric sheets 56 are illustratively sized to fill a portion of the channel 50. In other embodiments, each insert 44 may be made from other ceramic-based or non-ceramic-based composite materials including chopped fibers (random or directional), fiber tows, and/or unidirectional fiber tape combined with a matrix material. In still other embodiments, each insert 44 may be made from a monolithic material.

Each of the plurality of braze layers 46 are arranged between a corresponding insert 44 and the head 54 within the channel 50 to bond the inserts 44 with the head 54 as shown in Figs. 4 and 5. In the illustrative embodiment, the braze layers 46 are made from a silicide including at least one of zirconium, molybdenum, hafnium, boron, and carbon. In some embodiments, the braze layers 46 may include inert ceramic fibers. In other embodiments, the braze layers 46 may be made from other materials suitable for bonding the inserts 44 with the head 54.

An illustrative method of making the blade retaining feature 35 includes the manufacturing post 42 along with the platform 38 and the airfoil 40 of the turbine blade 34. The method also includes manufacturing plurality of inserts 44. Then, the inserts 44 are arranged in spaced apart relation to one another in the channel 50. When the inserts 44 are arranged in the channel 50, the plurality of braze layers 46 are deposited between the head 54 and the inserts 44 to bond the inserts 44 to the post 42 as shown in Figs. 4 and 5.

Manufacturing the post 42 illustratively includes preforming ceramic fiber fabric sheets 56 (two-dimensional or three-dimensional) to form the body 52 and the head 54 and densifying the preformed sheets via one or more of polymer infiltration, slurry infiltration, prepreg infiltration, chemical vapor infiltration, and melt infiltration. When densification is complete, the channel 50 and final geometry of the post 42 (Y-shape) is defined by machining the densified ceramic matrix composite.

Manufacturing the inserts 44 illustratively includes cutting and preforming at least one ceramic fiber sheet into a predetermined shape sized to fill a portion of the channel 50 and densifying the preformed sheet(s). Densifying the preformed sheets includes one or more processes of polymer infiltration, slurry infiltration, prepreg infiltration, chemical vapor infiltration, and melt infiltration. When densification is complete, the final geometry of the inserts 44 is defined by machining the densified ceramic matrix composite.

In other embodiments, manufacturing the inserts 44 may include preforming and densifying a slug of composite material including reinforcing fibers and a matrix material. Then, the final geometry of the inserts 44 is defined by machining the densified slug. In still other embodiments, manufacturing the inserts 44 may include machining slugs of other stock material.

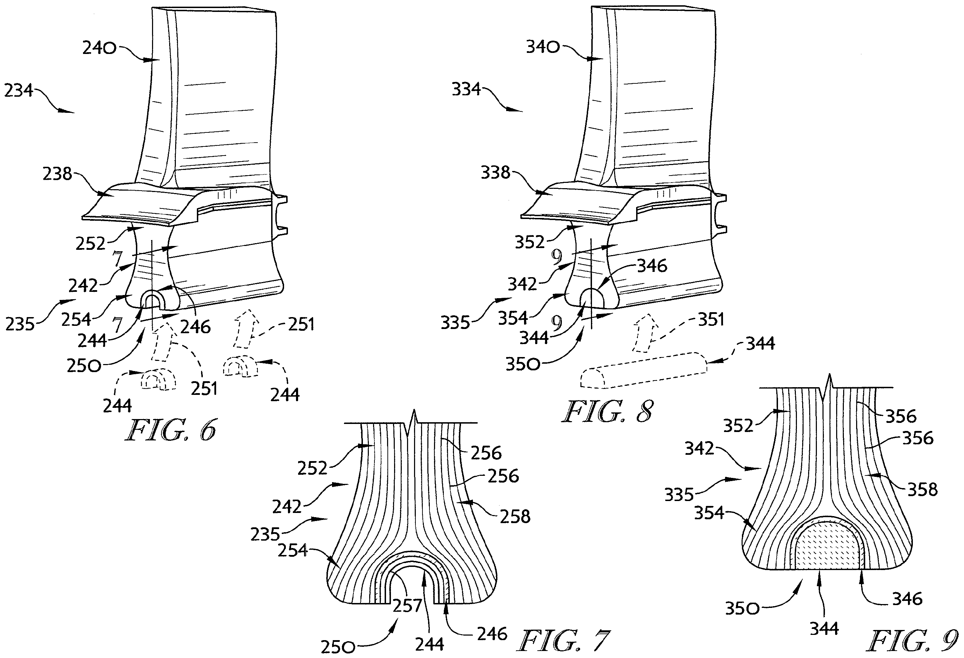

Another illustrative turbine blade 234 is shown in Figs. 6 and 7. The turbine blade 234 is configured for use in engine 10 and is substantially similar to the turbine blade 34 shown in Figs. 1-5 and described herein. Accordingly, similar reference numbers in the 200 series indicate features that are common between the turbine blade 34 and the turbine blade 234. Further the method of making the blade retaining feature 235 of the turbine blade 234 is similar to the method of making the retaining feature 35 the turbine blade 34 described herein. The description of the engine 10 and turbine blade 34 and the method of making the blade retaining feature 35 are hereby incorporated by reference to apply to the turbine blade 334, except in instances when it conflicts with the specific description and drawings of the turbine blade 334.

Unlike the turbine blade 34, the inserts 244 of the blade retaining feature 235 included in the turbine blade 234 are U-shaped as shown in Figs. 6 and 7. Additionally, the fabric sheets 257 of the inserts 244 extend along walls of the channel 250 as shown in Fig. 7.

Another illustrative turbine blade 334 is shown in Figs. 8 and 9. The turbine blade 334 is configured for use in engine 10 and is substantially similar to the turbine blade 34 shown in Figs. 1-5 and described herein. Accordingly, similar reference numbers in the 300 series indicate features that are common between the turbine blade 34 and the turbine blade 334. Further the method of making the blade retaining feature 335 of the turbine blade 334 is similar to the method of making the retaining feature 35 the turbine blade 34 described herein. The description of the engine 10 and turbine blade 34 and the method of making the blade retaining feature 35 are hereby incorporated by reference to apply to the turbine blade 334, except in instances when it conflicts with the specific description and drawings of the turbine blade 334.

Unlike the turbine blade 34, the only one insert 344 is included in the blade retaining feature 335 included in the turbine blade 334 as shown in Figs. 6 and 7. Additionally, single insert 344 is sized to extend along the entire channel 350 formed in the head 354 of the post 344. In other embodiments, the single insert 344 may be sized to extend along only a portion of the channel 350.

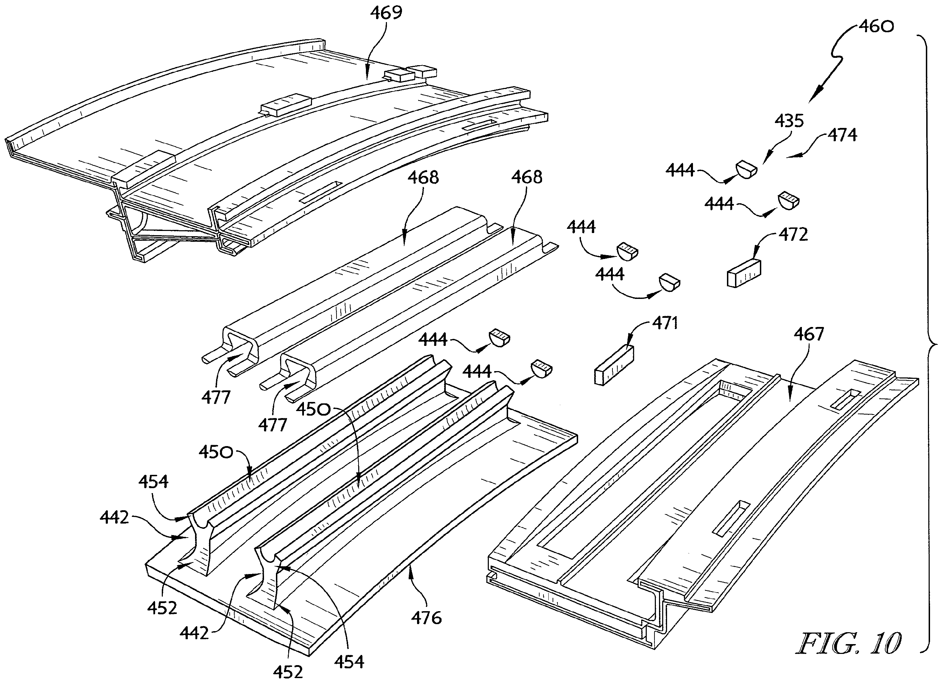

Turning now to Fig. 10, an exploded perspective view of a turbine shroud assembly 460 included in the turbine 18 is shown. The turbine shroud assembly 460 includes with a turbine blade track 466 that that extends around turbine wheel assembly 26 to block combustion products from passing over the blades 34 without pushing the blades 34 to rotate as shown in Fig. 2. Combustion products that are allowed to pass over the blades 34 do not push the blades 34 and such passed-over products contribute to lost performance within the engine 10.

The turbine shroud assembly 460 illustratively includes a metallic support ring 464, the turbine blade track 466, and a plurality of metallic segment retainers 468 as shown in Figs. 2 and 10. The support ring 464 is coupled to the case 20 and includes a segmented outer carrier 469 and a segmented inner carrier 470 circumferentially located relative to one another by a pair of keys 471, 472. The turbine blade track 466 includes a plurality of blade track segments 474. The structure and arrangement of the turbine shroud assembly 460 is further discussed in U.S. Provisional Application No. 61/779534 filed March 13, 2013, hereby incorporated by reference herein.

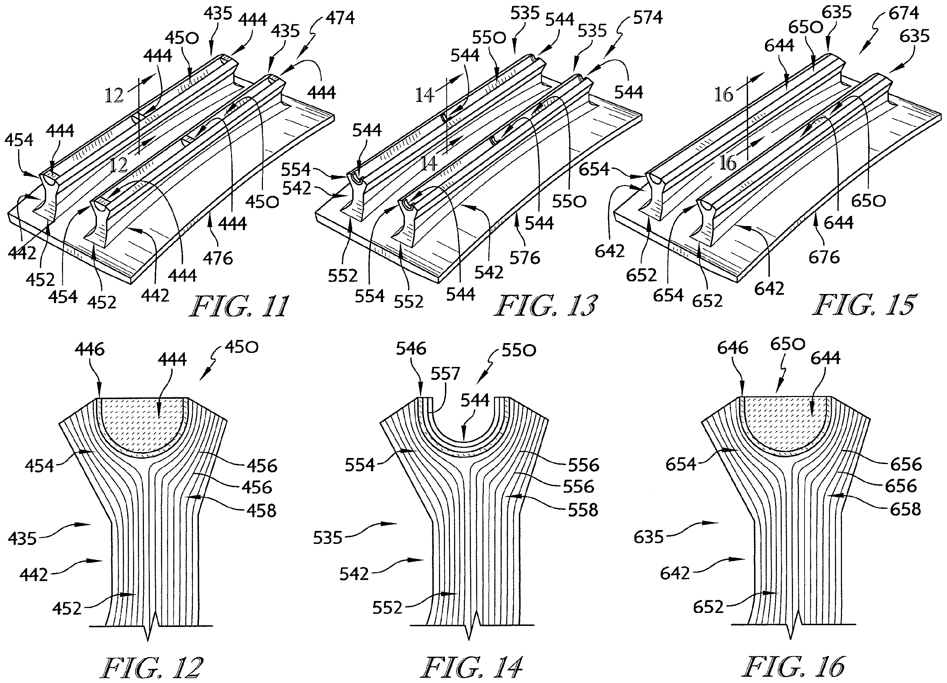

In the illustrative embodiment, each of the blade track segments 474 are coupled to the support ring 464 by pair of complementary retaining features 435, 477 as shown in Figs. 2 and 10. Each blade track segment 474 includes a pair of segment retaining features 435 extending outward in the radial direction from the blade track runner 476 as shown in Figs. 10 and 11. Complementary ring retaining features 477 are provided by the segment retainers 468. The ring retaining features 477 are configured to receive the segment retaining features 435 of each turbine blade track segment 474 to couple the blade track segments 474 to the support ring 464 as shown in Fig. 2. In the illustrative embodiment, the segment retaining features 435 and the ring retaining features 477 cooperate to form a dovetail-type retention system 485 when the segment retaining features 435 are inserted into the ring retaining features 477. in other embodiments, the retaining features 435, 477 of the blade track segments 474 and the segment retainers 468 may cooperate to form a fir-tree-type retention system or another suitable retention system.

Each segment retaining feature 435 is substantially similar to the blade retaining feature 35 described herein. Accordingly, similar reference numbers in the 400 series indicate features that are common between the segment retaining feature 435 and the blade retaining feature 35. Further the method of making the segment retaining feature 435 of the blade track segment 74 is similar to the method of making the retaining feature 35 the turbine blade 34 described herein. The description of the blade retaining feature 35 and the method of making the blade retaining feature 35 are hereby incorporated by reference to apply to the segment retaining feature 435, except in instances when it conflicts with the specific description and drawings of the segment retaining feature 435.

However, unlike the blade retaining feature 35, the post 442 of the segment retaining feature 435 extends outwardly in the radial direction from the integral turbine engine component it is connected to (e.g. the blade track runner 76). Additionally, the channel 450 extends through the head 454 perpendicular to the axis of engine rotation 11 and opens outwardly in a radial direction, facing away from the rest of the blade track segment 74.

Another illustrative blade track segment 574 is shown in Figs. 13 and 14. The blade track segment 574 is configured for use in engine 10 and is substantially similar to the blade track segment 474 shown in Figs. 2 and 10-12 described herein. Accordingly, similar reference numbers in the 500 series indicate features that are common between the blade track segment 474 and the blade track segment 574. The description of the engine 10 and blade track segment 474 are hereby incorporated by reference to apply to the blade track segment 574, except in instances when it conflicts with the specific description and drawings of the blade track segment 574.

Unlike the blade track segment 474, the inserts 544 of the segment retaining feature 535 included in the blade track segment 574 are U-shaped as shown in Figs. 13 and 14. Additionally, the fabric sheets 556 of the inserts 544 extend along walls of the channel 50 as shown in Fig. 14.

Another illustrative blade track segment 674 is shown in Figs. 15 and 16. The blade track segment 674 is configured for use in engine 10 and is substantially similar to the blade track segment 474 shown in Figs. 2 and 10-12 described herein. Accordingly, similar reference numbers in the 600 series indicate features that are common between the blade track segment 474 and the blade track segment 674. The description of the engine 10 and blade track segment 474 are hereby incorporated by reference to apply to the blade track segment 674, except in instances when it conflicts with the specific description and drawings of the blade track segment 674.

Unlike the blade track segment 474, the only one insert 644 is included in the segment retaining feature 635 included in the blade track segment 674 as shown in Figs. 15 and 16. Additionally, single insert 644 is sized to extend along the entire channel 650 formed in the head 654 of the post 644. In other embodiments, the single insert 644 may be sized to extend along only a portion of the channel 650.

While the disclosure has been illustrated and described in detail in the foregoing drawings and description, the same is to be considered as exemplary and not restrictive in character, it being understood that only illustrative embodiments thereof have been shown and described.

## Claims

1. A retention feature for use in a gas turbine engine (10) comprising
a ceramic post (42, 344, 442, 644) including a body (52) adapted to be coupled to a turbine engine component and a head (54, 354, 454, 654) coupled to the body (52), the head (54, 354, 454, 654) formed to include a space,
a first insert (44, 244, 344, 544, 644) arranged in the space
a first braze layer (46) extending from the ceramic post (42, 344, 442, 644) to the first insert (44, 244, 344, 544, 644) to bond the first insert (44, 244, 344, 544, 644) to the ceramic post (42, 344, 442, 644), and
a second insert (44, 244, 344, 544, 644), spaced apart from the first insert (44, 244, 344, 544, 644), arranged in the space and a second braze layer (46) extending from the ceramic post (42, 344, 442, 644) to the second insert (44, 244, 344, 544, 644) to bond the second insert (44, 244, 344, 544, 644) to the ceramic post (42, 344, 442, 644),
wherein the space forms a channel (50, 250, 350, 450, 650) opening away from the body (52) and extending through the head (54, 354, 454, 654) of the ceramic post (42, 344, 442, 644), **characterised in that** the two inserts (44, 244, 344, 544, 644) are arranged spaced apart from one another at opposite ends of the channel (50, 250, 350, 450, 650).

2. The retention feature of claim 1, wherein the first insert (44, 244, 344, 544, 644) is sized to fill a portion of the channel (50, 250, 350, 450, 650) and/ or the second insert (44, 244, 344, 544, 644) is sized to fill a portion of the channel (50, 250, 350, 450, 650).

3. The retention feature of one of the claims 1 to 2, wherein the first insert (44, 244, 344, 544, 644) is U-shaped and/ or the second insert (44, 244, 344, 544, 644) is U-shaped.

4. The retention feature of claim 3, wherein the body (52) and the head (54, 354, 454, 654) of the ceramic post (42, 344, 442, 644) cooperate to form a Y-shape.

5. The retention feature of claim 1, wherein the first braze layer (46) includes silicon and/or
wherein the first braze layer (46) includes inert ceramic fibers.

6. The retention feature of one of the preceding claims, wherein the silicide includes at least one of zirconium, molybdenum, hafnium, boron, and carbon.

7. The retention feature of claim 1, wherein the ceramic post (42, 344, 442, 644) consists essentially of a ceramic matrix composite preferably including a ceramic fiber fabric,
and/or wherein the ceramic post (42, 344, 442, 644) includes silicon and carbon.

8. The retention feature of claim 1, wherein the first insert (44, 244, 344, 544, 644) consists essentially of a ceramic matrix composite,
and/or wherein the first insert (44, 244, 344, 544, 644) includes silicon and carbon,
and/or wherein the first insert (44, 244, 344, 544, 644) includes ceramic fiber fabric, preferably chopped ceramic fibers.

9. The retention feature of claim 1, wherein the body (52) of the ceramic post (42, 344, 442, 644) includes a proximal end coupled to an airfoil (40) and a distal end coupled to the head (54, 354, 454, 654).

10. The retention feature of claim 9, wherein the airfoil (40) includes a ceramic matrix material.

11. The retention feature of claim 1, wherein the body (52) of the ceramic post (42, 344, 442, 644) includes a proximal end coupled to a turbine blade track runner (76, 476) and a distal end coupled to the head (54, 354, 454, 654).

12. The retention feature of claim 11, wherein the turbine blade track runner (76, 476) includes a ceramic matrix material.

13. A method of making a retention feature for use in a gas turbine engine (10) comprising the steps of
manufacturing a composite post (42, 344, 442, 644) including a body (52) and a head (54, 354, 454, 654) coupled to the body (52), the head (54, 354, 454, 654) formed to include a space,
manufacturing a first insert (44, 244, 344, 544, 644),
arranging the first insert (44, 244, 344, 544, 644) into the space formed in the head (54, 354, 454, 654), and
depositing a first braze layer (46) between the head (54, 354, 454, 654) and the first insert (44, 244, 344, 544, 644) to bond the insert (44, 244, 344, 544, 644) to the head (54, 354, 454, 654), and
providing a second insert (44, 244, 344, 544, 644), spaced apart from the first insert (44, 244, 344, 544, 644), arranged in the space and a second braze layer (46) extending from the ceramic post (42, 344, 442, 644) to the second insert (44, 244, 344, 544, 644) to bond the second insert (44, 244, 344, 544, 644) to the ceramic post (42, 344, 442, 644),
wherein the space forms a channel (50, 250, 350, 450, 650) opening away from the body (52) and extending through the head (54, 354, 454, 654) of the ceramic post (42, 344, 442, 644), **characterised in that** the two inserts (44, 244, 344, 544, 644) are arranged spaced apart from one another at opposite ends of the channel (50, 250, 350, 450, 650).

## Patentansprüche

1. Halteeinrichtung zur Verwendung in einem Gasturbinenmotor (10), umfassend
einen keramischen Ständer (42, 344, 442, 644) mit einem Körper (52), der mit einer Turbinenmotorkomponente gekoppelt werden kann, und einem Kopf (54, 354, 454, 654), der mit dem Körper (52) gekoppelt ist, wobei der Kopf (54, 354, 454, 654) geformt ist, um einen Raum aufzuweisen,
einen ersten Einsatz (44, 244, 344, 544, 644), der in dem Raum angeordnet ist,
eine erste Hartlötschicht (46), die sich vom keramischen Ständer (42, 344, 442, 644) zum ersten Einsatz (44, 244, 344, 544, 644) erstreckt, um den ersten Einsatz (44, 244, 344, 544, 644) mit dem keramischen Ständer (42, 344, 442, 644) zu verbinden, und
einen zweiten Einsatz (44, 244, 344, 544, 644), der von dem ersten Einsatz (44, 244, 344, 544, 644) beabstandet und in dem Raum angeordnet ist, und eine zweite Hartlötschicht (46), die sich vom keramischen Ständer (42, 344, 442, 644) zum zweiten Einsatz (44, 244, 344, 544, 644) erstreckt, um den zweiten Einsatz (44, 244, 344, 544, 644) mit dem keramischen Ständer (42, 344, 442, 644) zu verbinden,
wobei der Raum einen Kanal (50, 250, 350, 450, 650) bildet, der sich vom Körper (52) weg öffnet und sich durch den Kopf (54, 354, 454, 654) des keramischen Ständers (42, 344, 442, 644) erstreckt,
**dadurch gekennzeichnet, dass** die zwei Einsätze (44, 244, 344, 544, 544, 644) an gegenüberliegenden Enden des Kanals (50, 250, 350, 450, 650) voneinander beabstandet angeordnet sind.

2. Halteeinrichtung nach Anspruch 1, wobei der erste Einsatz (44, 244, 344, 544, 544, 644) so bemessen ist, dass er einen Abschnitt des Kanals (50, 250, 350, 450, 650) ausfüllt, und/oder der zweite Einsatz (44, 244, 344, 544, 644) so bemessen ist, dass er einen Abschnitt des Kanals (50, 250, 350, 450, 650) ausfüllt.

3. Halteeinrichtung nach einem der Ansprüche 1 bis 2, wobei der erste Einsatz (44, 244, 344, 544, 644) U-förmig ist und/oder der zweite Einsatz (44, 244, 344, 544, 544, 644) U-förmig ist.

4. Halteeinrichtung nach Anspruch 3, wobei der Körper (52) und der Kopf (54, 354, 454, 654) des keramischen Ständers (42, 344, 442, 644) zum Ausbilden einer Y-Form zusammenwirken.

5. Halteeinrichtung nach Anspruch 1, wobei die erste Hartlötschicht (46) Silizium beinhaltet und/oder
wobei die erste Lötschicht (46) inerte keramische Fasern beinhaltet.

6. Halteeinrichtung nach einem der vorhergehenden Ansprüche, wobei das Silicid mindestens eines von Zirkonium, Molybdän, Hafnium, Bor und Kohlenstoff beinhaltet.

7. Halteeinrichtung nach Anspruch 1, wobei der keramische Ständer (42, 344, 442, 644) im Wesentlichen aus einem keramischen Matrixverbund besteht, der vorzugsweise ein Keramikfasergewebe beinhaltet,
und/oder wobei der keramische Ständer (42, 344, 442, 644) Silizium und Kohlenstoff beinhaltet.

8. Halteeinrichtung nach Anspruch 1, wobei der erste Einsatz (44, 244, 344, 544, 644) im Wesentlichen aus einem keramischen Matrixverbund besteht,
und/oder wobei der erste Einsatz (44, 244, 344, 544, 644) Silizium und Kohlenstoff beinhaltet,
und/oder wobei der erste Einsatz (44, 244, 344, 544, 644) ein Keramikfasergewebe beinhaltet, vorzugsweise geschnittene Keramikfasern.

9. Halteeinrichtung nach Anspruch 1, wobei der Körper (52) des keramischen Ständers (42, 344, 442, 644) ein proximales Ende, das mit einem Flügel (40) verbunden ist, und ein distales Ende, das mit dem Kopf (54, 354, 454, 654) verbunden ist, aufweist.

10. Halteeinrichtung nach Anspruch 9, wobei der Flügel (40) ein keramisches Matrixmaterial beinhaltet.

11. Halteeinrichtung nach Anspruch 1, wobei der Körper (52) des keramischen Ständers (42, 344, 442, 644) ein proximales Ende, das mit einer Turbinenschaufelführungsschiene (76, 476) verbunden ist, und ein distales Ende, das mit dem Kopf (54, 354, 454, 654) verbunden ist, beinhaltet.

12. Halteeinrichtung nach Anspruch 11, wobei die Turbinenschaufelführungsschiene (76, 476) ein keramisches Matrixmaterial enthält.

13. Verfahren zur Herstellung einer Halteeinrichtung zur Verwendung in einem Gasturbinenmotor (10), umfassend die Schritte von
Herstellen eines Verbundständers (42, 344, 442, 644) mit einem Körper (52) und einem Kopf (54, 354, 454, 654), der mit dem Körper (52) gekoppelt ist, wobei der Kopf (54, 354, 454, 654) so geformt ist, dass er einen Raum aufweist,
Herstellen eines ersten Einsatzes (44, 244, 344, 544, 644), Anordnen des ersten Einsatzes (44, 244, 344, 544, 644) in dem Raum, der in dem Kopf (54, 354, 454, 654) gebildet ist, und
Aufbringen einer ersten Hartlötschicht (46) zwischen den Kopf (54, 354, 454, 654) und den ersten Einsatz (44, 244, 344, 544, 644) zum Verbinden des Einsatzes (44, 244, 344, 544, 544, 644) mit dem Kopf (54, 354, 454, 654) und
Bereitstellen eines zweiten Einsatzes (44, 244, 344, 544, 644), der von dem ersten Einsatz (44, 244, 344, 544, 644) beabstandet und in dem Raum angeordnet ist, und einer zweiten Hartlötschicht (46), die sich von dem keramischen Ständer (42, 344, 442, 644) zum zweiten Einsatz (44, 244, 344, 544, 644) erstreckt, um den zweiten Einsatz (44, 244, 344, 544, 644) mit dem keramischen Ständer (42, 344, 442, 644) zu verbinden,
wobei der Raum einen Kanal (50, 250, 350, 450, 650) bildet, der sich vom Körper (52) weg öffnet und sich durch den Kopf (54, 354, 454, 654) des keramischen Ständers (42, 344, 442, 644) erstreckt,
**dadurch gekennzeichnet, dass** die zwei Einsätze (44, 244, 344, 544, 644) an gegenüberliegenden Enden des Kanals (50, 250, 350, 450, 650) beabstandet voneinander angeordnet sind.

## Revendications

1. Elément de retenue destiné à être utilisé dans un moteur de turbine à gaz (10), comprenant
un jambage céramique (42, 344, 442, 644) comprenant un corps (52) adapté à être couplé à un composant de moteur de turbine et une tête (54, 354, 454, 654) couplée au corps (52), la tête (54, 354, 454, 654) étant formée de sorte qu'elle comprend un espace,
un premier insert (44, 244, 344, 544, 644) disposé dans l'espace,
une première couche de brasure (46), qui s'étend à partir du jambage céramique (42, 344, 442, 644) jusqu'au premier insert (44, 244, 344, 544, 644) pour relier le premier insert (44, 244, 344, 544, 644) au jambage céramique (42, 344, 442, 644), et
un deuxième insert (44, 244, 344, 544, 644) espacé du premier insert (44, 244, 344, 544, 644) et disposé dans l'espace, et une deuxième couche de brasure (46), qui s'étend à partir du jambage céramique (42, 344, 442, 644) jusqu'au deuxième insert (44, 244, 344, 544, 644) pour relier le deuxième insert (44, 244, 344, 544, 644) au jambage céramique (42, 344, 442, 644), dans lequel l'espace forme un canal (50, 250, 350, 450, 650), qui s'ouvre en s'éloignant du corps (52), et qui s'étend à travers la tête (54, 354, 454, 654) du jambage céramique (42, 344, 442, 644),
**caractérisé en ce que**
les deux inserts (44, 244, 344, 544, 644) sont espacés l'un de l'autre et disposés à des extrémités opposées du canal (50, 250, 350, 450, 650).

2. Elément de retenue selon la revendication 1, dans lequel le premier insert (44, 244, 344, 544, 644) est dimensionné de sorte qu'il remplit une partie du canal (50, 250, 350, 450, 650) et/ou le deuxième insert (44, 244, 344, 544, 644) est dimensionné de sorte qu'il remplit une partie du canal (50, 250, 350, 450, 650).

3. Elément de retenue selon l'une des revendications 1 à 2, dans lequel le premier insert (44, 244, 344, 544, 644) comprend une forme de U et/ou le deuxième insert (44, 244, 344, 544, 644) comprend une forme de U.

4. Elément de retenue selon la revendication 3, dans lequel le corps (52) et la tête (54, 354, 454, 654) du jambage céramique (42, 344, 442, 644) coopèrent l'un avec l'autre pour former une forme en Y.

5. Elément de retenue selon la revendication 1, dans lequel la première couche de brasure (46) comprend du silicium et/ou
dans lequel la première couche de brasure (46) comprend des fibres céramiques inertes.

6. Elément de retenue selon l'une des revendications précédentes, dans lequel la siliciure comprend au moins une élément parmi le zirconium, le molybdène, le hafnium, le bore et le carbone.

7. Elément de retenue selon la revendication 1, dans lequel le jambage céramique (42, 344, 442, 644) consiste essentiellement en un composite à matrice céramique, qui comprend de préférence un tissu en fibres céramiques,
et/ou dans lequel le jambage céramique (42, 344, 442, 644) comprend du silicium et du carbone.

8. Elément de retenue selon la revendication 1, dans lequel le premier insert (44, 244, 344, 544, 644) consiste essentiellement en un composite à matrice céramique,
et/ou dans lequel le premier insert (44, 244, 344, 544, 644) comprend du silicium et du carbone,
et/ou dans lequel le premier insert (44, 244, 344, 544, 644) comprend un tissu en fibres céramiques, de préférence en fibres céramiques hachées.

9. Elément de retenue selon la revendication 1, dans lequel le corps (52) du jambage céramique (42, 344, 442, 644) comprend une extrémité proximale couplée à une aube (40) et une extrémité distale couplée à la tête (54, 354, 454, 654).

10. Elément de retenue selon la revendication 9, dans lequel l'aube (40) comprend un matériau à matrice céramique.

11. Elément de retenue selon la revendication 1, dans lequel le corps (52) du jambage céramique (42, 344, 442, 644) comprend une extrémité proximale couplée à un rail de voie d'aube de turbine (76, 476) et une extrémité distale couplée à la tête (54, 354, 454, 654).

12. Elément de retenue selon la revendication 11, dans lequel le rail de voie d'aube de turbine (76, 476) comprend un matériau à matrice céramique.

13. Procédé de fabrication d'un élément de retenue pour l'utilisation dans un moteur de turbine à gaz (10) comprenant les étapes de
fabriquer un jambage composite (42, 344, 442, 644) comprenant un corps (52) et une tête (54, 354, 454, 654) couplée au corps (52), la tête (54, 354, 454, 654) étant formée de sorte qu'elle comprend un espace,
fabriquer un premier insert (44, 244, 344, 544, 644),
disposer le premier insert (44, 244, 344, 544, 644) dans l'espace formé dans la tête (54, 354, 454, 654), et
déposer une première couche de brasure (46) entre la tête (54, 354, 454, 654) et le premier insert (44, 244, 344, 544, 644) pour relier l'insert (44, 244, 344, 544, 644) à la tête (54, 354, 454, 654), et
fournir un deuxième insert (44, 244, 344, 544, 644) espacé du premier insert (44, 244, 344, 544, 644) et disposé dans l'espace, et une deuxième couche de brasure (46), qui s'étend à partir du jambage céramique (42, 344, 442, 644) jusqu'au deuxième insert (44, 244, 344, 544, 644) pour relier le deuxième insert (44, 244, 344, 544, 644) au jambage céramique (42, 344, 442, 644), dans lequel l'espace forme un canal (50, 250, 350, 450, 650), qui s'ouvre en s'éloignant du corps (52), et qui s'étend à travers la tête (54, 354, 454, 654) du jambage céramique (42, 344, 442, 644),
**caractérisé en ce que**
les deux inserts (44, 244, 344, 544, 644) sont espacés l'un de l'autre et disposés à des extrémités opposées du canal (50, 250, 350, 450, 650).
